# EUROPÄISCHE PATENTSCHRIFT

(11) **EP 1 082 864 B1**
(45) Veröffentlichungstag und Bekanntmachung des Hinweises auf die Patenterteilung: **30.07.2008**
(21) Anmeldenummer: 99924677.0
(22) Anmeldetag: 24.03.1999
(51) Int. Cl.: H04Q 7/22

(54) **VERFAHREN UND MOBIL-KOMMUNIKATIONSSYSTEM ZUR STEUERUNG EINES KURZNACHRICHTENDIENSTES**
METHOD AND MOBILE COMMUNICATIONS SYSTEM FOR CONTROLLING A SHORT MESSAGE SERVICE
PROCEDE ET SYSTEME DE COMMUNICATION MOBILE POUR ASSURER LA COMMANDE D'UN SERVICE DE MESSAGERIE COURTE

(30) Priorität: 02.06.1998 DE 19824631; 10.11.1998 DE 19851864
(43) Veröffentlichungstag der Anmeldung: 14.03.2001
(73) Patentinhaber: Nokia Siemens Networks GmbH & Co. KG, 81541 München (DE)
(72) Erfinder: FÖLL, Uwe, D-14612 Falkensee (DE)
(86) Internationale Anmeldenummer: PCT/DE1999/000899
(87) Internationale Veröffentlichungsnummer: WO 1999/063772

(56) Entgegenhaltungen:
- WO-A-95/12292
- WO-A-98/02007
- WO-A-98/56195

## Beschreibung

Die Erfindung betrifft ein Verfahren und ein Mobil-Kommunikationssystem zur Steuerung eines Kurznachrichtendienstes.

Der Kurznachrichtendienst (Short Message Service) ermöglicht einem mobilen Teilnehmer eines Mobilfunknetzes, alphanumerische Nachrichten über seine Mobilstation zu senden und zu empfangen. Jeder mobile Teilnehmer ist in einer Teilnehmerdatenbasis (Heimatregister) des Mobilfunknetzes mit seinen Daten und Diensten registriert, wobei auch für die Inanspruchnahme des Kurznachrichtendienstes eine entsprechende Berechtigungsinformation vorliegen muß. Eine oder mehrere Kurznachrichten werden von einem Kommunikationsendgerät eines mobilen Teilnehmer des Mobilfunknetzes (A-Teilnehmer) zu einem anderen Teilnehmer (B-Teilnehmer) ausgesendet und in für den Kurznachrichtendienst vorgesehenen Diensteeinrichtungen (Short message service center) üblicherweise zwischengespeichert. Üblicherweise gibt es mehrere Diensteeinrichtungen mit zwischengespeicherten Kurznachrichten.

In den Mobilfunknetzen ist es den Netzbetreibern derzeit nicht möglich, bestimmte Diensteeinrichtungen für die eigenen Teilnehmer zu sperren. Das heißt jeder mobile Teilnehmer kann über sein Kommunikationsendgerät seine Kurznachrichten über eine beliebige Diensteeinrichtung versenden. Ein Netzbetreiber, der seinen Teilnehmern eine eigene Diensteeinrichtung zur Verfügung stellt, kann nicht verhindern, dass diese Teilnehmer die Diensteeinrichtungen eines anderen Netzbetreibers benutzen, und ihm somit Kosten für die Benutzung der fremden Netzeinrichtung entstehen.

Die WO95/12292 offenbart, Kurznachrichten sowohl über das SMSC des Kurznachrichtenabsenders wie auch über das SMSC des Kurznachrichtenempfängers zu senden, wobei eine Empfänger-SMSC-Adresse im HLR gespeichert werden kann, so dass der SM-Absender diese Information nicht selbst wissen muß. Der die SMSC-Adresse von einem HLR an das die SM weiterleitende MSC gesandt wird, ist hierbei keine Speicherung von SMSC-Adressen in einer Liste eines MSC vorgesehen.

Es ist Aufgabe der vorliegenden Erfindung, ein Verfahren und ein Mobilkommunikationssystem anzugeben, durch welche die Steuerung des Kurznachrichtendienstes zum Vorteil des Netzbetreibers ein Mobilfunknetzes verbessert werden kann, wobei vermieden wird, dass die Kurznachrichten vom Kommunikationsendgerät bzw. Mobilfuntkteilnehmer zu beliebigen Diensteeinrichtungen - insbesondere in fremden, gegebenenfalls kostspieligen Netzen - geroutet werden.

Diese Aufgabe wird gemäß der Erfindung durch die Merkmale des Patentanspruchs 1 hinsichtlich des Verfahrens und durch die Merkmale des Patentanspruchs 12 hinsichtlich des Mobil-Kommunikationssystems gelöst. Weiterbildungen der Erfindung sind in den Unteransprüchen angegeben.

Ausgehend davon, dass von einem Kommunikationsendgerät eines mobilen Teilnehmers Kurznachrichten in ein Mobilfunknetz gesendet und zu einer für den mobilen Teilnehmer zuständigen Vermittlungseinrichtung geroutet werden, sieht der Gegenstand der Erfindung vor, dass von der Vermittlungseinrichtung eine Adresse, die für den mobilen Teilnehmer eine zur Behandlung des Kurznachrichtendienstes zuständige Diensteeinrichtung kennzeichnet, mit den Kurznachrichten empfangen wird, und dass die Kurznachrichten zur Zwischenspeicherung in der Diensteeinrichtung und zum Senden an ein Kommunikationsendgerät eines anderen Teilnehmers dann geroutet werden, wenn die empfangene Adresse in einer Adressentabelle der Vermittlungseinrichtung enthalten ist.

Auf diese Weise wird verhindert, dass die Kurznachrichten vom Kommunikationsendgerät bzw. mobilen Teilnehmer zu beliebigen Diensteeinrichtungen - insbesondere in fremden, gegebenenfalls kostspieligen Netzen - geroutet werden. Über die Adressentabelle und die Auswertung der vom Endgerät jeweils empfangenen Diensteeinrichtungs-Adresse kann mit einfachen Mitteln und in wirtschaftlicher Weise erreicht werden, dass beispielsweise nur die vom Netzbetreiber für dessen Teilnehmer installierte, kostengünstige Diensteeinrichtung genutzt wird, andere Diensteeinrichtungen jedoch für die eigenen Teilnehmer gesperrt werden.

Es hat sich als besonders vorteilhaft erwiesen, wenn in die Adressentabelle alle Adressen der zur Behandlung des Kurznachrichtendienstes vorgesehenen Diensteeinrichtungen eingetragen werden. Damit können sowohl netzinterne als auch netzfremde Diensteeinrichtungen zur Behandlung des Kurznachrichtendienstes bestimmt werden, was zusätzliche Flexibilität für den Netzbetreiber und den Teilnehmer mit sich bringt.

Eine besonders günstige Variante der Erfindung sieht vor, dass in die Adressentabelle die Adressen der Diensteeinrichtungen teilnehmerbezogen eingetragen werden. Damit kann das Sperren bzw. Freigeben von Diensteeinrichtungs-Adressen teilnehmerindividuell erfolgen, d.h. den mobilen Teilnehmern, die sich nur vorübergehend in einem Besucher-Mobilfunknetz aufhalten (als roamende Teilnehmer), wird der Zugriff auf die Diensteeinrichtungen in ihrem Heimat-Mobilfunknetz teilnehmerbezogen erlaubt, während er für die eigenen Teilnehmer verwehrt bleibt.

Vorzugsweise werden die Adressen der Diensteeinrichtungen für die mobilen Teilnehmer jeweils in einer zentralen Teilnehmerdatenbasis seines Heimat-Mobilfunknetzes individuell administriert und bei einem Wechsel des Aufenthaltsorts des Teilnehmers in eine der aktuell zuständigen Vermittlungseinrichtung zugeordnete dezentrale Teilnehmerdatenbasis geladen.

Gemäß einer anderen bevorzugten Weiterbildung der Erfindung werden für die mobilen Teilnehmer eines Mobilfunknetzes nur die Adressen der netzeigenen Diensteeinrichtungen in der zentralen Teilnehmerdatenbasis individuell eingetragen. Dadurch lassen sich die Adressen nutzbarer Diensteeinrichtungen von den Adressen nicht zur Verfügung stehender Diensteeinrichtungen unterscheiden und für das Routing der Kurznachrichten zu einer geeigneten Diensteeinrichtung anwenden.

So enthalten gemäß einer vorteilhafte Weiterbildung der Erfindung die in die Adressentabelle eingetragenen Adressen auch Adressen von Diensteeinrichtungen, die außerhalb des Heimat-Mobilfunknetzes angeordnet sind - beispielsweise eine Adresse der in einem Besucher-Mobilfunknetz angeordneten Diensteeinrichtung.

Vorzugsweise wird von der Vermittlungseinrichtung vor dem Routen der Kurznachrichten ein Vergleich der empfangenen Adresse mit den in der Adressentabelle eingetragenen Adressen hinsichtlich Adressenidentität durchgeführt.

Auch ist es von Vorteil, wenn für den Fall, dass die empfangene Adresse nicht in der Adressentabelle eingetragen ist, eine Information über die Nichtzustellbarkeit der Kurznachrichten von der Vermittlungseinrichtung generiert und an das Kommunikationsendgerät des mobilen Teilnehmers rückgesendet wird.

Das Mobil-Kommunikationssystem gemäß der Erfindung weist neben dem Kommunikationsendgerät des mobilen Teilnehmers, das Kurznachrichten in ein Mobilfunknetz sendet, die für den mobilen Teilnehmer zuständige Vermittlungseinrichtung zum Empfang der Kurznachrichten und der Adresse, die für den mobilen Teilnehmer eine zur Behandlung des Kurznachrichtendienstes zuständige Diensteeinrichtung kennzeichnet, auf. Darüber hinaus sind Steuermittel in der Vermittlungseinrichtung vorgesehen, die die Kurznachrichten zur Zwischenspeicherung in der Diensteeinrichtung und zum Senden an ein Kommunikationsendgerät eines anderen Teilnehmers dann routet, wenn die empfangene Adresse in einer Adressentabelle der Vermittlungseinrichtung enthalten ist.

Die Erfindung wird anhand eines in einer Zeichnung dargestellten Ausführungsbeispiels näher erläutert. Im einzelnen zeigen
- FIG 1: das Blockschaltbild eines Mobil-Kommunikationssystems zur Steuerung des Kurznachrichtendienstes in einer ersten Variante, und
- FIG 2: das Blockschaltbild des Mobil-Kommunikationssystems zur Steuerung des Kurznachrichtendienstes in einer zweiten Variante.

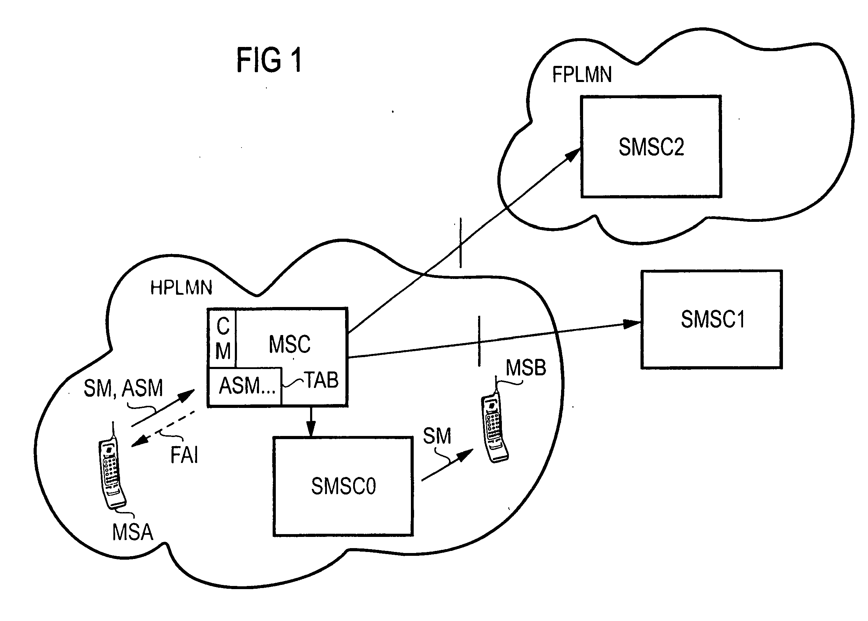

In der Darstellung gemäß FIG 1 sei angenommen, dass ein mobiler Teilnehmer sich momentan in seinem Heimat-Mobilfunknetz aufhält und Kurznachrichten gemäß dem an sich bekannten Kurznachrichtendienst (Short-Message-Service) senden und empfangen kann. Bei der Steuerung des Kurznachrichtendienstes werden von dem mobilen Teilnehmer über sein Kommunikationsendgerät MSA - im vorliegenden Beispiel eine Mobilstation - Kurznachrichten SM (Short Messages) generiert und an ein Kommunikationsendgerät MSB eines anderen Teilnehmers - im vorliegenden Beispiel ebenfalls einer Mobilstation - ausgesendet. Voraussetzung für das Senden und Empfangen der Kurznachrichten SM ist zum einen eine Berechtigung des mobilen Teilnehmers zur Inanspruchnahme des Kurznachrichtendienstes sowie die Erreichbarkeit der Mobilstation abhängig von seinem Aufenthaltsort im jeweiligen Mobilfunknetz. Die vom A-Teilnehmer gesendeten Kurznachrichten SM können jedoch ebenso von einem Teilnehmer eines leitungsgebundenen Kommunikationsnetzes - z.B. ISDN-Teilnehmer - oder von einem Teilnehmer eines schnurlosen Kommunikationsnetzes - z.B. DECT-Teilnehmer - über entsprechende Kommunikationsendgeräte empfangen werden.

Es sei im Beispiel weiterhin angenommen, dass die Mobilstationen MSA, MSB sich in demselben Mobilfunknetz HPLMN aufhalten und in Teilnehmerdatenbasen registriert sind. Das Mobilfunknetz HPLMN verfügt über Basisstationen, die zum funktechnischen Teilsystem des Mobilfunknetzes gehören und über eine Luftschnittstelle mit den Mobilstationen MSA, MSB kommunizieren. Das funktechnische Teilsystem des Mobilfunknetzes HPLMN verfügt darüber hinaus über Basisstationssteuerungen, die funktechnische Steuerungsfunktionen übernehmen und jeweils mit mehreren Basisstationen in Verbindung stehen. Jede Basisstationssteuerung ist über eine Schnittstelle mit zumindest einer Vermittlungseinrichtung MSC (Mobile Switching Center) im Mobilfunknetz HPLMN verbunden, in deren Zuständigkeitsbereich auch die Mobilstation MSA des mobilen Teilnehmers fällt. Der Vermittlungseinrichtung MSC ist dabei üblicherweise eine dezentrale Teilnehmerdatenbasis - das Besucherregister - zur Speicherung und Administrierung der Teilnehmerdaten mobiler Teilnehmer für die Dauer ihres jeweiligen Aufenthalts im Zuständigkeitsbereich zugeordnet. Zur Behandlung des Kurznachrichtendienstes übernimmt die Vermittlungseinrichtung MSC vermittlungstechnische Funktionen, wie das Routen der eintreffenden Kurznachrichten SM zu einer mit ihr verbundenen Diensteeinrichtung, z.B. im vorliegenden Beispiel zu der netzeigenen Diensteeinrichtung SMSC0 (SMS Mobile Switching Center). Diese Diensteeinrichtung SMSC0 speichert die von der Vermittlungseinrichtung MSC eintreffenden Kurznachrichten SM zwischen, bevor sie über die für den mobilen Teilnehmer zuständige Basisstation des funktechnischen Teilsystems an das Kommunikationsendgerät MSB gesendet werden.

Die Vermittlungseinrichtung MSC weist eine Adressentabelle TAB auf, in der alle Adressen ASM... der zur Behandlung des Kurznachrichtendienstes vorgesehenen Diensteeinrichtungen SMSC0... eingetragen sind. Im vorliegenden Beispiel empfängt die Vermittlungseinrichtung MSC mit den Kurznachrichten SM eine Adresse ASM, die von dem Kommunikationsendgerät MSA als die für den mobilen A-Teilnehmer geeignete Diensteeinrichtung administriert wird. Liegt diese Adresse ASM in der Tabelle TAB - wie dargestellt - vor, was durch eine Steuereinheit CM in der Vermittlungseinrichtung MSC vorzugsweise durch einfachen Adressenvergleich ermittelt wird, erfolgt die Behandlung des Kurznachrichtendienstes durch die gekennzeichnete Diensteeinrichtung. Im Beispiel veranlaßt die Steuereinheit CM das Routen der Kurznachrichten SM zu der durch die Adresse ASM identifizierten Diensteeinrichtung SMSC0, die die eintreffenden Kurznachrichten SM zwischenspeichert und an das Kommunikationsendgerät MSB des Zielteilnehmers zu einem späteren Zeitpunkt weiterleitet.

Die Steuereinheit CM der Vermittlungseinrichtung MSC generiert für den Fall, dass die empfangene Adresse ASM nicht in der Adressentabelle TAB eingetragen ist, eine Information FAI über die Nichtzustellbarkeit der Kurznachrichten SM und sendet sie an das Kommunikationsendgerät MSA des mobilen Teilnehmers zurück. Stimmt die eingetroffene Adresse ASM jedoch mit einer anderen in der Adressentabelle TAB eingetragenen Adresse einer Diensteeinrichtung überein, erfolgt das Routen der empfangenen Kurznachrichten SM zu dieser Diensteeinrichtung und von dort zum B-Teilnehmer. Im vorliegenden Beispiel sind zwei weitere Diensteeinrichtungen SMSC1, SMSC2 gezeichnet, von denen die eine Diensteeinrichtung SMSC2 in einem anderen Mobilfunknetz FPLMN, das für den Fall des Roamens des B-Teilnehmers dorthin ein Besucher-Mobilfunknetz darstellt, und die andere Diensteeinrichtung SMSC1 als einzelner Netzknoten - ohne Anbindung an eines der Mobilfunknetze HPLMN, FPLMN - angeordnet sind.

Auf diese Weise werden die Kurznachrichten SM nach einer Bewertung anhand der Adressentabelle TAB in der Vermittlungseinrichtung MSC nur an die Diensteeinrichtungen weitergeleitet, die einen Tabelleneintrag aufweisen. Die Tabelleneinträge, z.B. ASM... zur Kennzeichnung der Diensteeinrichtung SMSC0... für die Behandlung der Kurznachrichten SM seiner mobilen Teilnehmer können vom Netzbetreiber des Mobilfunknetzes HPLMN durch einen entsprechenden Zugriff auf die Vermittlungseinrichtung MSC jederzeit eingerichtet und wieder verändert werden. So kann der mobile Teilnehmer eines Netzbetreibers A die Adresse einer Diensteeinrichtung eines Netzbetreibers B als Teilnehmerdaten administrieren und Kurznachrichten über diese Diensteeinrichtung des Netzbetreibers B und/oder über die Diensteeinrichtung des Netzbetreibers A versenden.

Für den Fall, dass an die Vermittlungseinrichtung MSC eine Dienstesteuerungsstelle (Service Control Point) angebunden ist, erfolgt die entsprechende Behandlung des Kurznachrichtendienstes gemäß der Erfindung auch für IN-Dienste (Intelligent Network), beispielsweise für die Vorvergebührung (prepaid service), bei der die Signalisierung vom Kommunikationsendgerät über die Vermittlungseinrichtung MSC zur Dienstesteuerungsstelle des Intelligenten Netzes verläuft.

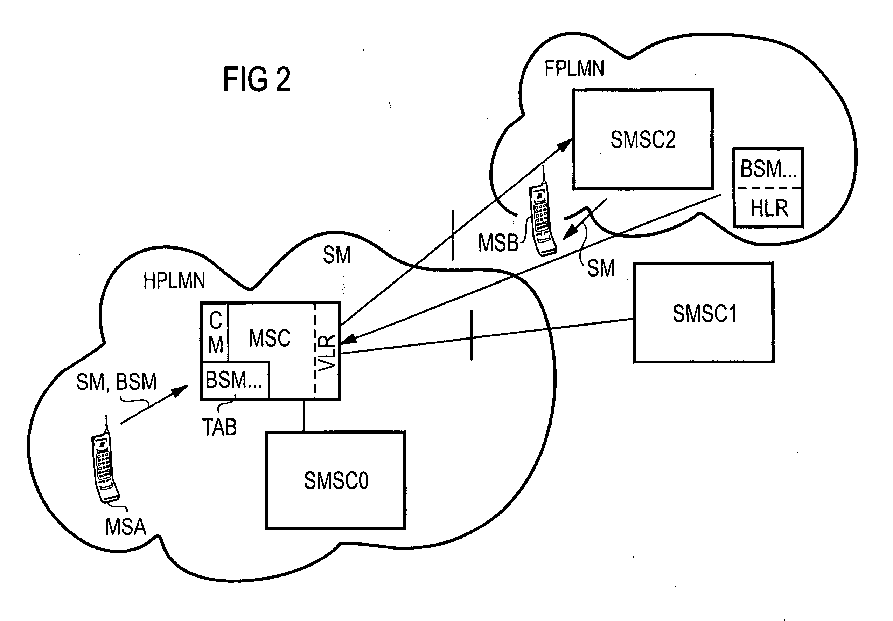

FIG 2 zeigt eine alternative Variante der Erfindung, bei der Adressen BSM von Diensteeinrichtungen, die zur Behandlung des Kurznachrichtendienstes geeignet und auswählbar sind, teilnehmerbezogen in die Adressentabelle TAB der Vermittlungseinrichtung MSC eingetragen werden. Es sei angenommen, dass aus Sicht des mobilen Teilnehmers mit seiner Mobilstation MSA das Mobilfunknetz HPLMN das Besucher-Mobilfunknetz, in dem er sich vorübergehend aufhält, und das Mobilfunknetz FPLMN sein Heimat-Mobilfunknetz darstellen. Der B-Teilnehmer hält sich mit seiner Mobilstation MSB im Mobilfunknetz FPLMN auf. Der im Mobilfunknetz HPLMN sich bewegende A-Teilnehmer sendet über seine Mobilstation MSA die Kurznachrichten SM zu der ihn aktuell betreueenden Vermittlungseinrichtung MSC mit angeschlossenem Besucherregister VLR aus. Dabei fügt die Mobilstation MSA eine Adresse BSM einer in seinem Heimat-Mobilfunknetz FPLMN liegenden Diensteeinrichtung, z.B. der Diensteeinrichtung SMSC2, hinzu. Bevor die Vermittlungseinrichtung MSC die Kurznachrichten SM zur richtigen Diensteeinrichtung routet, überprüft sie anhand eines Adressenvergleichs, ob die Tabelleneinträge in der Tabelle TAB die Adresse BAM enthalten.

Damit für roamende A-Teilnehmer auch vom Besucher-Mobilfunknetz HPLMN aus ein Zugriff auf netzeigene Diensteeinrichtungen des Heimat-Mobilfunknetzes FPLMN zum Zustellen der Kurznachrichten möglich ist, werden die Adressen geeigneter Diensteeinrichtungen für diese mobilen Teilnehmer in einer zentralen Teilnehmerdatenbasis HLR - dem Heimatregister - seines Heimat-Mobilfunknetzes FPLMN individuell administriert. Im vorliegenden Beispiel weist der Teilnehmereintrag im Heimatregister HLR neben den üblichen teilnehmerbezogenen Daten zusätzlich eine oder mehrere Adressen BSM nutzbarer Diensteeinrichtungen auf. Die Adresse BSM oder Adressen können auch für mehrere mobile Teilnehmer identisch sein. Sobald ein Wechsel des Aufenthaltsorts des Teilnehmers in einen neuen Zuständigkeitsbereich erfolgt (location update), wird ein Ladevorgang initiiert, bei dem diese Diensteeinrichtungs-adressen - hier z.B. die Adresse BSM - zu dem der aktuell zuständigen Vermittlungseinrichtung - z.B. MSC - zugeordneten Besucherregister VLR übertragen werden.

Die Vermittlungseinrichtung MSC - d.h. die Steuereinrichtung CM - liest die empfangenen Adressen - hier z.B. die Adresse BSM - in die Tabelle TAB ein oder wertet sie durch direkten Zugriff auf das Besucherregister VLR aus. Da Adressenidentität zwischen von der Mobilstation MSA empfangener Adresse BSM und in der Tabelle TAB gespeicherter Adresse BSM vorliegt, routet die Vermittlungseinrichtung die Kurznachrichten SM zu der adressierten Diensteeinrichtung SMSC2 im Heimat-Mobilfunknetz FPLMN weiter, die sie dann zum B-Teilnehmer bzw. zur Mobilstation MSB sendet. Dadurch, dass nur netzeigene Diensteeinrichtungen eines Mobilfunknetzes ausschließlich für die im jeweiligen Heimatregister HLR administrierten mobilen Teilnehmer individuell eingetragen und verwaltet werden, wird zum einen gewährleistet, dass diese Teilnehmer auch in fremden Netzen Kurznachrichten versenden können, und zum anderen ermöglicht, dass die mobilen Teilnehmer des fremden Mobilfunknetzes für diese fremden Diensteeinrichtungen gesperrt sind.

## Patentansprüche

1. Verfahren zur Steuerung eines Kurznachrichtendienstes in einem Mobil-Kommunikationssystem, bei dem
- von einem Kommunikationsendgerät (MSA) eines mobilen Teilnehmers Kurznachrichten (SM) in ein Mobilfunknetz (z.B. HPLMN) gesendet und zu einer für den mobilen Teilnehmer zuständigen Vermittlungseinrichtung (MSC) geroutet werden,
- von der Vermittlungseinrichtung (MSC) eine Adresse (ASM, BSM), die für den mobilen Teilnehmer eine zur Behandlung des Kurznachrichtendienstes zuständige Diensteeinrichtung (z.B. SMSC0, SMSC2) kennzeichnet, mit den Kurznachrichten (SM) empfangen wird, und bei dem
- die Kurznachrichten (SM) zur Zwischenspeicherung in der Diensteeinrichtung (z.B. SMSC0, SMSC2) und zum Senden an ein Kommunikationsendgerät (MSB) eines anderen Teilnehmers dann geroutet werden, wenn die empfangene Adresse (ASM, BSM) in einer Adressentabelle (TAB) der Vermittlungseinrichtung (MSC) enthalten ist.

2. Verfahren nach Anspruch 1, bei dem
in die Adressentabelle (TAB) alle Adressen (ASM, BSM)der zur Behandlung des Kurznachrichtendienstes vorgesehenen Diensteeinrichtungen (z.B. SMSC0) eingetragen werden.

3. Verfahren nach Anspruch 1 oder 2, bei dem
in die Adressentabelle (TAB) die Adressen (BSM) der Diensteeinrichtungen (z.B. SMSC2) teilnehmerbezogen eingetragen werden.

4. Verfahren nach Anspruch 3, bei dem
die Adressen (BSM) der Diensteeinrichtungen (z.B. SMSC2) für die mobilen Teilnehmer jeweils in einer zentralen Teilnehmerdatenbasis (HLR) seines Heimat-Mobilfunknetzes (z.B. FPLMN) individuell administriert und bei einem Wechsel des Aufenthaltsorts des Teilnehmers in eine der aktuell zuständigen Vermittlungseinrichtung (MSC) zugeordnete dezentrale Teilnehmerdatenbasis (VLR) geladen werden.

5. Verfahren nach Anspruch 4, bei dem
für die mobilen Teilnehmer eines Mobilfunknetzes (z.B. FPLMN) die Adressen (BSM) der netzeigenen Diensteeinrichtungen (z.B. SMSC2) in der zentralen Teilnehmerdatenbasis (HLR) individuell eingetragen werden.

6. Verfahren nach Anspruch 1 oder 2, bei dem
die in die Adressentabelle (TAB) eingetragenen Adressen auch Adressen von Diensteeinrichtungen (z.B. SMSC1, SMSC2) enthalten, die außerhalb des Heimat-Mobilfunknetzes angeordnet sind.

7. Verfahren Anspruch 6, bei dem
eine Adresse die in einem Besucher-Mobilfunknetz angeordnete Diensteeinrichtung (z.B. SMSC2) kennzeichnet.

8. Verfahren nach einem der vorhergehenden Ansprüche, bei dem von der Vermittlungseinrichtung (MSC) vor dem Routen der Kurznachrichten (SM) ein Vergleich der empfangenen Adresse (ASM, BSM) mit den in der Adressentabelle (TAB) eingetragenen Adressen hinsichtlich Adressenidentität durchgeführt wird.

9. Verfahren nach einem der vorhergehenden Ansprüche, bei dem für den Fall, dass die empfangene Adresse (ASM) nicht in der Adressentabelle (TAB) eingetragen ist, eine Information (FAI) über die Nichtzustellbarkeit der Kurznachrichten (SM) von der Vermittlungseinrichtung (MSC) generiert und an das Kommunikationsendgerät (MSA) des mobilen Teilnehmers rückgesendet wird.

10. Verfahren nach einem der vorhergehenden Ansprüche, bei dem die Kurznachrichten (SM) zu einem Kommunikationsendgerät (MSB) eines anderen mobilen Teilnehmers geroutet werden.

11. Verfahren nach einem der Ansprüche 1 bis 9, bei dem die Kurznachrichten (SM) zu einem Kommunikationsendgerät eines leitungsgebundenen Teilnehmers geroutet werden.

12. Mobil-Kommunikationssystem zur Steuerung eines Kurznachrichtendienstes, mit
- einem Kommunikationsendgerät (MSA) eines mobilen Teilnehmers, das Kurznachrichten (SM) in ein Mobilfunknetz (z.B. HPLMN) sendet,
- einer für den mobilen Teilnehmer zuständigen Vermittlungseinrichtung (MSC) zum Empfangen der Kurznachrichten (SM) und einer Adresse (ASM, BSM), die für den mobilen Teilnehmer eine zur Behandlung des Kurznachrichtendienstes zuständige Diensteeinrichtung (z.B. SMSC0, SMSC2) kennzeichnet, und mit
- Steuermittel (CM) in der Vermittlungseinrichtung (MSC), die die Kurznachrichten (SM) zur Zwischenspeicherung in der Diensteeinrichtung (z.B. SMSC0, SMSC2) und zum Senden an ein Kommunikationsendgerät (MSB) eines anderen Teilnehmers dann routet, wenn die empfangene Adresse (ASM, BSM) in einer Adressentabelle (TAB) der Vermittlungseinrichtung (MSC) enthalten ist.

## Claims

1. Method for controlling a short message service in a mobile communications system, in which
- short messages (SM) are sent into a mobile radio network (e.g. HPLMN) by a communication terminal (MSA) of a mobile subscriber and are routed to a switching facility (MSC) responsible for the mobile subscriber,
- an address (ASM, BSM), which identifies a service facility (e.g. SMSC0, SMSC2) responsible for dealing with the short message service for the mobile subscriber, is received together with the short messages (SM) by the switching facility (MSC), and in which
- the short messages (SM) are routed for temporary storage in the service facility (e.g. SMSC0, SMSC2) and for transmission to a communication terminal (MSB) of another subscriber if the received address (ASM, BSM) is contained in an address table (TAB) of the switching facility (MSC).

2. Method according to Claim 1, in which all addresses (ASM, BSM) of the service facilities (e.g. SMSC0) provided for dealing with the short message service are entered into the address table (TAB).

3. Method according to Claim 1 or 2, in which the addresses (BSM) of the service facilities (e.g. SMSC2) are entered into the address table (TAB) in a subscriber-related manner.

4. Method according to Claim 3, in which the addresses (BSM) of the service facilities (e.g. SMSC2) for the mobile subscribers are in each case individually administered in a central subscriber database (HLR) of his home mobile radio network (e.g. FPLMN) and, in the case of a change of location of the subscriber, are loaded into a decentralized subscriber database (VLR) associated with the switching facility (MSC) which is currently responsible.

5. Method according to Claim 4, in which the addresses (BSM) of the internal network service facilities (e.g. SMSC2) are individually entered in the central subscriber database (HLR) for the mobile subscribers of a mobile radio network (e.g. FPLMN).

6. Method according to Claim 1 or 2, in which the addresses entered into the address table (TAB) also contain addresses of service facilities (e.g. SMSC1, SMSC2) which are arranged outside the home mobile radio network.

7. Method according to Claim 6, in which an address identifies the service facility (e.g. SMSC2) arranged in a visited mobile radio network.

8. Method according to one of the preceding claims, in which the switching facility (MSC), before routing the short messages (SM), compares the received address (ASM, BSM) with the addresses entered in the address table (TAB) with respect to address identity.

9. Method according to one of the preceding claims, in which, in the case where the received address (ASM) is not entered in the address table (TAB), an information item (FAI) on the nondeliverability of the short messages (SM) is generated by the switching facility (MSC) and sent back to the communication terminal (MSA) of the mobile subscriber.

10. Method according to one of the preceding claims, in which the short messages (SM) are routed to a communication terminal (MSB) of another mobile subscriber.

11. Method according to one of Claims 1 to 9, in which the short messages (SM) are routed to a communication terminal of a line-connected subscriber.

12. Mobile communications system for controlling a short message service, comprising
- a communication terminal (MSA) of a mobile subscriber, which sends short messages (SM) into a mobile radio network (e.g. HPLMN),
- a switching facility (MSC), which is responsible for the mobile subscriber, for receiving the short messages (SM) and an address (ASM, BSM) which identifies a service facility (e.g. SMSC0, SMSC2) responsible for dealing with the short message service for the mobile subscriber, and comprising
- control means (CM) in the switching facility (MSC), which route the short messages (SM) for temporary storage in the service facility (e.g. SMSC0, SMSC2) and for transmission to a communication terminal (MSB) of another subscriber if the received address (ASM, BSM) is contained in an address table (TAB) of the switching facility (MSC).

## Revendications

1. Procédé pour contrôler un service de messagerie courte dans un système de communication mobile, dans lequel
- des messages courts (SM) sont envoyés par un terminal de communication (MSA) d'un abonné mobile dans un réseau de téléphonie mobile (par exemple HPLMN) et sont acheminés à un centre de commutation (MSC) compétent pour l'abonné mobile,
- une adresse (ASM, BSM) qui caractérise pour l'abonné mobile un équipement de service (par exemple SMSC0, SMSC2) compétent pour le traitement du service de messageries courtes pour l'abonné mobile, est reçu du centre de commutation (MSC) avec les messages courts (SM), et dans lequel
- les messages courts (SM) pour le stockage temporaire dans l'équipement de service (par exemple SMSC0, SMSC2) et pour l'envoie à un terminal de communication (MSB) d'un autre abonné sont acheminés dans le cas où l'adresse (ASM, BSM) reçu est contenue dans un tableau d'adresses (TAB) du centre de commutation (MSC).

2. Procédé selon la revendication 1, dans lequel
toutes les adresses (ASM, BSM) des équipements de service (par exemple SMSC0) prévus pour le traitement du service de messagerie courte sont inscrites dans le tableau d'adresses (TAB).

3. Procédé selon la revendication 1 ou 2, dans lequel
les adresses (BSM) des équipements de service (par exemple SMSC2) sont inscrites dans le tableau d'adresses (TAB) de façon spécifique par abonné.

4. Procédé selon la revendication 3, dans lequel
les adresses (BSM) des équipements de service (par exemple SMSC2) pour les abonnées mobiles sont administrées individuellement respectivement dans une base de données d'abonnés (HLR) centralisée de son réseau de téléphonie mobile de rattachement (par exemple FPLMN) et, dans le cas d'un changement du lieu de séjour de l'abonné, sont chargées dans une base de données d'abonnés (VLR) décentralisée, attribuée au centre de commutation (MSC) actuellement compétent.

5. Procédé selon la revendication 4, dans lequel,
pour les abonnées mobiles d'un réseau de téléphonie mobile (par exemple FPLMN), les adresses (BSM) des équipements de service (par exemple SMSC2) propres au réseau sont inscrites individuellement dans la base centralisée de données d'abonné (HLR).

6. Procédé selon la revendication 1 ou 2, dans lequel
les adresses inscrites dans le tableau d'adresses (TAB) contiennent également des adresses d'équipements de service (par exemple SMSC1, SMSC2) qui sont disposés à l'extérieur du réseau de téléphonie mobile de rattachement.

7. Procédé selon la revendication 6, dans lequel
une adresse caractérise l'équipement de service (par exemple SMSC2) disposé dans un réseau de téléphonie mobile de visiteur.

8. Procédé selon l'une quelconque des revendications précédentes, dans lequel
le centre de commutation (MSC) effectue avant le routage des messages courts (SM) une comparaison de l'adresse reçue (ASM, BSM) avec les adresses inscrites dans le tableau d'adresses (TAB) en ce qui concerne l'identité d'adresse.

9. Procédé selon l'une quelconque des revendications précédentes, dans lequel,
dans le cas où l'adresse reçue (ASM) n'est pas inscrite dans le tableau d'adresses (TAB), une information (FAI) sur la non-possibilité de remise des messages courts (SM) est générée par le centre de commutation (MSC) et est renvoyée au terminal de communication (MSA) de l'abonné mobile.

10. Procédé selon l'une quelconque des revendications précédentes, dans lequel
les messages courts (SM) sont acheminés à un terminal de communication (MSB) d'un autre abonné mobile.

11. Procédé selon l'une quelconque des revendications 1 à 9, dans lequel les messages courts (SM) sont acheminés à un terminal de communication d'un abonné relié par fil.

12. Système de communication mobile pour le contrôle d'un service de messagerie courte, comprenant
- un terminal de communication (MSA) d'un abonné mobile, qui envoie des messages courts (SM) dans un réseau de téléphonie mobile (par exemple HPLMN).
- un centre de commutation (MSC) compétent pour l'abonné mobile pour la réception des messages courts (SM) et d'une adresse (ASM, BSM), qui caractérise pour l'abonné mobile un équipement de service (par exemple SMSC0, SMSC2) compétent pour le traitement de service de messagerie courte, et
- des moyens de contrôle (CM) au centre de commutation (MSC), qui acheminent des messages courts (SM) pour le stockage temporaire dans l'équipement de service (par exemple SMSC0, SMSC2) et pour l'envoi à un terminal de communication (MSB) d'un autre abonné dans le cas où l'adresse (ASM, BSM) reçue est contenue dans un tableau d'adresses (TAB) du centre de commutation (MSC).
